# EUROPEAN PATENT SPECIFICATION

(11) **EP 1 129 627 B1**
(45) Date of publication and mention of the grant of the patent: **02.05.2003**
(21) Application number: 01610014.1
(22) Date of filing: 27.02.2001
(51) Int. Cl.: A23K 1/16, A23K 1/18

(54) **Natural feed additive, a method of preparing said feed additive, a feed mixture containing the feed additive as well as a method of breeding farm animals.**
Natürlicher Futterzusatz, Verfahren zur Herstellung dieses Futterzusatzes, diesen Futterzusatz enthaltende Futtermischung sowie Verfahren zur Aufzucht von Farmtieren
Additif naturel pour l'alimentation animale, procédé permettant de préparer cet additif, mélange alimentaire contenant cet additif ainsi qu'une méthode pour l'élevage d'animaux de ferme

(30) Priority: 29.02.2000 DK 200000324
(43) Date of publication of application: 05.09.2001
(73) Proprietor: NOR-FEED A/S, 2650 Hvidovre (DK); Dansk Landbrugs Grovvareselskab a.m.b.a., 1503 Copenhagen V (DK)
(72) Inventor: Jensen, Jesper Moller, 4100 Ringsted (DK); Elgaard, Troels, 2660 Brondby Strand (DK)
(74) Representative: Zeuthen-Aagaard, Henrik

(56) References cited:
- EP-A- 0 293 935
- EP-A- 0 391 886
- EP-A- 0 819 386
- FR-A- 2 594 644
- GB-A- 2 321 583
- US-A- 4 128 640
- US-A- 6 156 355
- T.G. KO ET AL.: "Study for the development of antibiotics-free diet for weanling pigs" HANGUK CHUKSAN HAKHOE CHI - KOREAN JOURNAL OF ANIMAL SCIENCE, vol. 42, no. 1, 2000, pages 37-44, XP001002264 KOREAN SOCIETY OF ANIMAL SCIENCE, SUWON, KO ISSN: 0367-5807
- K.H. BAE ET AL.: "Use of metabolically active substances to substitute for antibiotics in finishing pigs" HANGUK CHUKSAN HAKHOE CHI - KOREAN JOURNAL OF ANIMAL SCIENCE, vol. 41, no. 1, 1999, pages 23-30, XP001002262 KOREAN SOCIETY OF ANIMAL SCIENCE, SUWON, KO ISSN: 0367-5807

## Description

### Technical Field

The present invention relates to a natural feed additive with natural active substances or substances identical to natural substances, a feed mixture containing the additive as well as a method of breeding farm animals.

### Background Art

It is well-known to use antibiotic or chemotherapeutic substances as so-called growth-promoters in connection with the breeding of farm animals. During recent years there has been a focus on the problems caused by the widespread use of antibiotics or chemotherapeutics as growth-promoters. Thus more and more pathogenic micro-organisms can develop a resistance to the antibiotics in question which accordingly become less effective. Furthermore, a risk applies of antibiotic residues remaining in meat products with the result that human beings also consume antibiotics, which in turn may have the result that micro-organisms infecting human beings with diseases can develop a resistance. A continued use of antibiotics as growth-promoters may increase the risk of an epidemic among animals and/or human beings which cannot be combated by means of antibiotics. One of the hitherto used growth-promoters has turned out to be carcenogenic as well.

In view of these problems attempts have been made to develop alternative methods so as to ensure a disease-free breeding of farm animals without the use of antibiotics. Furthermore the use of the classic growth-promoters in the pig production has already ceased in some countries, such as in Denmark.

This cessation of the use of conventional growth-promoters in connection with the production of piglets in the weight ratio of 6 to 35 kg has turned out to cause problems in up to 80% of all stocks. Typical symptoms are an increased occurrence of diarrhoea requiring treatment and that the piglets do not flourish, and an increased frequency of infections, especially caused by E. coli or Lawsonia, as well as dysentery and diseases similar to dysentery.

In order to economize on the breeding of farm animals a demand for alternative solutions exists accordingly, said alternative solutions being capable of preventing or reducing these infections and diseases in farm animals while not being encumbered with the risk of the classic growth-promoters of developing a resistance in the micro-organisms. Such solutions can advantageously be based on natural active substances or substances identical to natural active substances. These substances should also have the same or preferably an improved effect on the growth and the utilization of the animal feed of the animals compared to the classic growth-promoters in order to ensure the acceptance of the farmer and within the animal feed industry.

It is known to use saponin-containing or flavonoid-containing plant materials in animal feed for farm animals. Thus WO 91/10 370 (Hult) describes a composition for improving the environment as well as the state of health of animals, such as pigs and horses. The composition comprises a mixture of saponin, especially sarsaponin of Yucca schidigera, and garlic. The composition is admixed the animal feed and causes a reduced release of ammonium and sulphur gases from the animals.

GB 2 321 583 (Greene and Jennings) describes a feed supplement for animals, especially horses. The feed supplement includes herbs, molasses and calcium oxide. Examples of herbs are inter alia garlic, oregano, basil, thyme and fenugreek. The mixture of molasses and calcium oxide causes a chemical reaction which in turn results in formation of a herb-containing solid block which is lick-acceptable to animals. The feed supplement is usable for animals, such as for instance sheeps and pigs.

It is also known to use less digestible oligosaccharides which are hard to digest for the farm animals, but which can be degraded by Bifido-bacteria in the intestinal system. During this degrading process inter alia short-chained fatty acids are formed which are digestible to the animals as source of energy. An improved growth of Bifido-bacteria is obtained. As a result, the formation of lactic acid and acetic acid is increased in the intestinal system, which in turn reduces the number of pathogenic bacteria.

An example of the latter has been described in US 5 952 033 (Anantharaman et al.) in form of a cereal product containing fructo-oligosaccharide for instance in form of inulin. The product has a useful effect in the digestive tract of human beings and animals. The product can be used as an animal feed for pets and as a breakfast cereal. Further examples of oligosaccharide-containing materials with a useful effect in the digestive tract of human beings and animals have been described in US 4,865,852, EP 0171026, DK 160346 and WO 96/03150.

EP 0 549 478 (Matusani; Katta et al.) describes an animal feed containing galacto-oligosaccharide. The animal feed reduces the tendency to diarrhoea and ensures accordingly an increased growth. US 4 902 674 (Coors Biotech; Speights) describes a method and a composition for inhibiting the growth of salmonella in the intestine of animals by means of fructo-oligosaccharide. US 4 873 229 (Snow Brand Milk Prod.; Deya et al.) describes an animal feed containing a galacto-oligosaccharide in form of galactosyl-lactose or digalactosyl-lactose. The animal feed is rather active in preventing diarrhoea and can accordingly indirectly improve the growth and utilization of the animal feed of the animals.

As illustrated above literature reveals a multitude of proposals for improving the health, the growth and the utilization of the animal feed in connection with breeding of farm animals, but none of these proposals has turned out to be so effective that they can replace the classic growth-promoters, such as tylosin phosphate and virginiamycin.

It turned out surprisingly that it is possible to produce a feed additive by using a combination of an oligosaccharide, a saponin-containing material preferably from plants and additional plant material containing natural antibacterial substances, where said feed additive can match the classic growth-promoters with respect to efficiency.

### Brief Description of the Invention

The present invention relates to a natural feed additive with natural, active substances and/or substances identical to natural, active substances which comprise an oligosaccharide-containing component, a first active component comprising saponin and being obtained from a plant material originating from one or more plants selected among the genera Yucca, Quillaja, Azadirachta and/or Trigonella, or which is a synthetic material comprising corresponding active substances identical to natural substances and a second active component comprising an antibacterially active substance obtained from a plant material originating from one or more plants selected among citrus fruits, hips, grapes, green pepper and plants of the labiatae family (Lamiaceae), or which is a synthetic material comprising corresponding active substances identical to natural substances, as well as possible conventional adjuvants or additives.

The invention relates furthermore to a method of producing the feed additive, whereby the oligosaccharide-containing component, the first active component and the second active component are mixed in the dry state, adjuvants or additives optionally also being added.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed Description of the Invention

The feed additive according to the invention is based on natural substances and/or substances identical to natural substances in a combination which ensures flourishing and healthy farm animals in a more natural way than the one obtained by the classic growth-promoters. Thus it is possible to obtain the same daily growth as the one obtained with the classic growth-promoters while the resistance problems associated with said growth-promoters can simultaneously be avoided.

Examples of possible oligosaccharides in the feed additive according to the invention are fructo-oligosaccharides, galacto-oligosaccharides and corresponding oligosaccharides, such as mannan-oligosaccharides which are relatively indigestible for the farm animals, but which have a regulating effect on the digestive system of said farm animals and ensure a healthy bacterial flora especially in the intestine. Thus lactic acid bacteria, such as Bifido-bacteria, are supported, and the growth of anaerobic, undesirable bacteria, such as Campylobacter and Lawsonia, is suppressed.

Particularly preferred oligosaccharides are fructo-oligosaccharides of the formula G-Fₙ, where G is glucose and F is fructose and n is an integer typically between 3 and 9. Such fructo-oligosaccharides can be obtained from plants of the composite family (Asteraceae), especially from the plants chicory (Cichorium intybus L.) or Jerusalem artichoke (Helianthus tuberosus L.), by way of extraction and drying, cf. for instance the description of DK 163 332 B (corresponding to US 5 127 956, Hansen et al.) or by drying and grinding the oligosaccharide-containing plant parts into powder.

It is also possible to produce oligosaccharides by way of synthesis based on mono and disaccharides, such as by a stepwise synthesis of saccharose and fructose by employing the enzyme fructosyltransferase. Such synthetically structured oligosaccharides can in theory also be used in the feed additive according to the invention, but they are unlikely to be considered due to the costs involved.

The oligosaccharide-containing component is in the present description and in the claims to be construed as an oligosaccharide-containing material obtained by synthesis or preferably from one or more of the above plants or corresponding oligosaccharide-containing plants by way of drying and grinding of the parts of a plant including the active substances, or by another way of obtaining the active substances, such as by way of extraction or pressing followed by isolation and/or drying. As it is a question of natural materials, the content of the active substances may vary. Therefore, the quantities indicated in the description and in the claims must be related to a plant material including approximately 80% by weight of oligosaccharide. Thus when a specific recipe indicates 35 g of oligosaccharide, and the oligosaccharide-containing material available only includes 40% by weight of oligosaccharide, it is according to the recipe necessary to use 70 g of the material in question.

Saponins is a class of glycosides constituted by a sugar moiety, viz. the glucon moiety, and a sapogenin moiety, viz. the aglucon moiety. Type examples of sugar moieties of the saponins are: glucose, galactose and pentose. Saponins can be divided into neutral saponins and acid saponins depending on the sapogenin moiety of said saponin; in neutral saponins the sapogenin moiety is a steroide, whereas the sapogenin moiety is a triterpene structure in acid saponins.

The first active component forming part of the feed additive according to the invention comprises saponin-containing materials obtained from a plant material originating from one or more plants selected among the genera Yucca, Quillaja, Azadirachta and/or Trigonella, or it is a synthetic material comprising corresponding substances identical to natural substances. Such plant materials can according to literature include high or low amounts of other substances possibly contributing to the activity. Particularly preferred plant materials are obtained from the plants Quillaja saponaria, Yucca schidigera or Trigonella foenum graecum (fenugreek). Less preferred plants are Azadirachta indica (neem). The saponin-containing materials are natural binders of volatile nitrogen-containing and sulphur-containing compounds, and they improve the utilization by the animals of the nitrogen and fatty content in the animal feed. The saponins have furthermore an environmentally improving effect because a reduced amount of nitrogen and sulphur compounds is liberated together with the urine and the faeces.

Some of the above saponin-containing materials have furthermore a weak, but wide-spectrum antibacterial effect. Such slightly antibacterial materials are mainly used on account of the content of saponin, and they are in the present description and claims defined as part of the first active component, and they are not to be considered included in the second active component in spite of said content of antibacterial material.

The first active component is in the present description and claims to be construed as a saponin-containing material obtained either from one or more of the above plants or corresponding saponin-containing plants, or it is a synthetically produced material identical to natural material. When the first active component has been obtained from plants, it can be obtained by way of drying and grinding of the parts of a plant including the active substances, or the active substances can be obtained in another way, such as by extraction or pressing followed by an isolation and/or drying. As it is a question of natural materials, the content of the active substances may vary. Therefore, the quantities indicated in the description and in the claims must be related to a plant material containing approximately 8% by weight of saponin.Thus when a specific recipe indicates 35 g of Yucca-powder, and the Yucca-powder available only contains 4% by weight of saponin, it is according to the recipe necessary to use 70 g of the Yucca-powder in question.

It must be underlined that the saponin content is an essential ingredient of the first active component, but that the plant materials also contain other substances possibly being important for the effect of the feed additive according to the invention. When it is desired to use a synthetically produced saponin-containing material identical to natural saponin-containing material, this factor must be considered. In order to ensure the presence of the necessary active substances it is at present preferred to use materials based on plants as the first active component.

The second active component forming part of the feed additive according to the invention comprises materials with a content if various antibacterially active substances, which together with the remaining substances of said materials ensure the effect of the second active component in the feed additive. It is assumed that in particular three groups of active compounds present in varying quantities in the plants in question render the substances of said groups usable as source of the materials constituting the second active component according to the invention. These three groups of active compounds are groups of compounds present in relatively high concentrations in some plants.

One group of active compounds being found to be contained in materials usable as the second active component according to the invention is a group of a number of antibacterial, substituted phenols. Examples of such antibacterial, substituted phenols are alkyl-substituted phenols, including dialkyl-substituted phenols with 1 to 5 carbon atoms in the alkyl groups. Particularly interesting phenols are hydroxycymenes, especially carvacrol and thymol.

Plant materials useful as sources of alkyl phenols, especially hydroxycymenes, comprise inter alia plants of the genus Citrus and plants of the labiatae family, especially oregano and thyme. Both oregano oil and thyme oil are rich in hydroxycymenes.

The second group of active compounds being found to be contained in materials usable as the second active component according to the invention is a group of a number of antibacterial terpenes. Examples of such antibacterial terpenes are pinene, cymene, cineol, borneol and campher, which are found inter alia in plants of the labiatae family, especially in oregano and thyme.

The third group of active compounds being found to be contained in materials useable as the second active component according to the invention is a group of flavonoids. Flavonoids are a class of compounds which are derivatives of flavone (= 2-phenyl-1,4-benzopyrone). In these derivatives, one or more of the H atoms in flavone are substituted with hydroxy groups or methoxy groups. Flavonoids occur in live tissue, where they are mainly bonded to sugar molecules.

Flavonoids are of wide occurence in plant materials, and in particular in citrus fruits, hips, apricots, grapes, green pepper and onions suitable as flavonoid source.

The second active component is in the present description and claims to be construed as a material obtained either from one or more of the plants *Citrus*, hips, grapes, green pepper and/or plants of the labiatae family (Lamiaceae), or a synthetically produced material identical to natural material. When the second active component is obtained from plants, it is obtained by drying and grinding of the parts of a plant containing the active substances, or the substances are obtained in another way, such as by extraction or pressing followed by isolation and/or drying. As it is a question of natural materials, the content of the active substances may vary.

Therefore the quantities indicated in the description and the claims must be related to the content of active substances in the plant material. For instance when it is a question of a flavonoid-containing plant material in which the antibacterial substances especially include a high amount of flavonoids, then the second component can be defined on the basis of a material containing approximately 8% by weight of flavonoid. Thus when a specific recipe indicates 35 g of Citrus-powder, and the Citrus-powder available only contains 4% by weight of flavonoid, it is according to the recipie necessary to use 70 g of the Citrus-powder in question.

Correspondingly, when it is a question of a plant material with a high content of hydroxycymenes, then the second component can be defined on the basis of a material containing approximately 8% by weight of hydroxycymenes. Thus when a specific recipe indicates 35 g of oregano-powder, and the oregano-powder available only contains 4% by weight of hydroxycymenes, it is according to the recipe necessary to use 70 g of the oregano-powder in question.

It should be underlined that the plant materials applicable as the active component may contain various active substances both within and outside the above three groups of compounds, and that individually these active substances can be assumed to be important for the effect of the feed additive according to the invention.

In order to ensure that the necessary active substances are present in the feed additive according to the invention, it is at present preferred to use natural plant materials as source of the second active component. Based on the present knowledge, synthetic hydroxycymenes are apparently just as efficient as plant materials in the second active component. The latter applies also to hydroxycymenes obtained by modification of other substances from plant materials, such as by oxidation and aromatisation of limonene.

Generally speaking, when it is considered to use a synthetically produced plant material identical to natural plant materials, it is necessary to take into account a possible need of other active substances in the second active component. It should for instance be mentioned that materials obtained from Citrus in addition to the flavonoids also contain antibacterial substances, such as Phlorin, as well as limonoids which can bind ammonia.

Examples of plant materials useful as the second active component are such that originate from citrus fruits, hips, grapes and green pepper, especially lemon, grapefruit, hips and grapes because these plant materials are good flavonoid-sources, but contain also other active substances having an antibacterial effect. Further examples of plant materials suitably forming part as the second active component are plant materials from the labiatae family (Lamiaceae), such as Satureia hortensis (savory), Origanum vulgare (oregano), Thymus vulgaris (thyme) and Rosmarinus officinalis (rosemary). These known spices have a supplemental effect as they clearly stimulate the appetite of pigs, and furthermore they contain various active compounds, such as hydroxycymenes and terpenes providing them with the desired wide-spectrum, antibacterial effect.

Particularly preferred as source of the second antibacterial component are citrus fruits, such as lemon or grapefruit with a high content of flavonoids. These materials contain limonoids as well. Limonoids and flavonoids are functionally active and can bind volatile nitrogen compounds and sulphur compounds formed in connection with the digestion of the animal feed. In addition, the flavonoids have a wide-spectrum, antibacterial effect.

The good results of the feed additive according to the invention are inter alia obtained because some of the plant substances forming part of the additive possess flavour-improving properties as well, and accordingly the feed additive is very attractive to the farm animals, which in turn implies that an increased consumption of animal feed can be expected.

Thus fenugreek can also act as a spice which is particularly attractive to pigs. An example of a further group of plant materials having a flavour-improving effect is found in the plant materials of the labiatae family (Lamiaceae), such as Satureia hortensis (savory), Origanum vulgare (oregano), Thymus vulgaris (thyme) and Rosmarinus officinalis (rosemary).

Suitable carriers for the active substances are preferably mineral, porous materials optionally based on hydrated magnesium and/or aliminum silicates. Examples thereof are sepiolite and other clay minerals of the sepiolite-palygorskite-family as well as zeolites, such as klinoptilolite. Such carrier materials can adsorb and absorb the active substances and release said substances at a suitable speed throughout the intestine of the animals. Moreover, the carriers operate such that they absorb a number of toxines in the gastro-intestinal tract of the animal, which in turn implies that they contribute to the favourable effect of the feed additive according to the present invention.

It appears from the above that according to the present invention it is possible to obtain a natural feed additive by combining an oligosaccharide-containing component, a first active component containing saponin, as well as the second active component containing an antibacterially active substance, where the feed additive has the effect that it is possible to ensure healthy and flourishing farm animals, in particular pigs, to a far higher degree than hitherto known.

The Applicant is not completely aware of how the interaction between the three components according to the invention on one side and the intestinal flora of the animals on the other side results in the novel, favourable effect on the animals. However, it is obvious to frame the theory that the idea per se of combining the components which
a) have a bacteria-regulating effect throughout the digestive system of the animal, and which have a particularly, viz. indirectly, combating effect on undesirable anerobic bacteria, such as Campylobacter and Lawsonia (oligosaccharides) with
b) a first active component capable of binding volatile nitrogen and sulphur-containing compounds in the gastro-intestinal tract of the animals,
c) as well as components with a wide-spectrum, antibacterial effect, such as hydroxycymenes, terpenes, and flavonoids,
results exactly in the balance between the digestive speed and the regulation of the anaerobic and undesirable bacteria and the bacteria with a favourable effect, respectively, in the gastro-intestinal tract of the animals which are necessary for keeping the animals healthy and flourishing.

In this connection many other natural wide-spectrum, strongly antibacterial substances might have the desired effect as the second active component.

Therefore it is possible within the scope of the invention as the second active component to use any natural, wide-spectrum, strongly antibacterial substance having the desired effect in a feed additive according to the invention.

In order to determine whether a specific material based on plants is useable as the second active component in the feed additive according to the invention, a suitable and simple way is to determine the inhibiting effect of the material, such as by the agar-diffusion method, against representative bakteria, such as *Salmonella typhimurium, Escherichia coli*, *Staphylococcus aureus* and *Streptococcus faecium*.

The carrier material should have a particle size where at least 50% by weight of the particles are smaller than 350 µm, preferably at least 90% by weight of the particles are smaller than 250 µm.

A preferred saponin-containing plant material useable as the first active component can be obtained from cortex and twigs from the plant Quillaja saponaria. The plant material to be used in the feed additive according to the invention can be suitably processed, such as by the parts of the plant being dried and ground to a powder. The active substances can alternatively be extracted by means of a solvent, such as an aqueous solvent, and dried into a powder under lenient conditions. The content of the active substances in the resulting powder can vary, but typically the content of saponin is in the range of from 4 to 12% by weight.

The same procedure is followed for obtaining the other saponin-containing plant materials suitable as the first active component in the feed additive according to the invention. Thus the saponin-containing parts of the plant in question can either be dried and ground into a powder or the active substances can be extracted by means of a suitable extracting agent and followed by a drying and/or isolation of the active substances.

Flavonoid-containing plant materials can as mentioned inter alia originate from the fruit mass of citrus fruits, especially lemon or grapefruit, and they can in a financially favourable manner be obtained from the fruit mass-containing residue remaining as a by-product after the production of juice; again either by drying and grinding into a powder or by extraction followed by isolation and/or drying.

Parts of a plant from citrus fruits, such as lemon and grapefruit and related types of citrus, are particularly useful as starting material. As mentioned these fruits have a relatively high content of limonoids and flavonoids, and in addition it is possible to utilize their content of cyclic terpenes, such as limonene, which by a simple chemical modification in form of oxidation and aromatisation can be converted into hydroxycymenes.

Other antibacterial plant materials can be obtained in corresponding ways on the basis of the parts of a plant containing the active substances.

The feed additive according to the invention can optionally comprise conventional adjuvants and/or additives, such as dust-reducing agents and preservatives.

### Example 1

For the production of 1 kg of feed additive the following materials are mixed in the dry state:

| | |
|---|---|
| Nor-Spice® AB powder | 25 g |
| Quillaja powder | 25 g |
| Fructo-oligosaccharide* | 100 g |
| Fenugreek powder | 35 g |
| Sepiolite 100 | 815 g |

| | |
|---|---|
| Nor-Spice AB powder is a flavonoid-containing material obtained from citrus; available from Nor-Natur ApS, Hvidovre, Denmark. *fructo-oligosaccharide (80% by weight), a spray-dried product produced from chicory root. **Sepiolite 100 is a fine-grained sepiolite product, where at least 90% by weight thereof have a particle size smaller than 125 µm; available from Nor-Feed ApS, Hvidovre, Denmark. | |

A mixing of the dried powdered materials results in 1000 g of additive. The additive can be used in the animal feed for pigs. Usually an amount of 2 to 12 kg of additive is used per 1000 kg of animal feed, especially 5 to 7 kg of additive per 1000 kg of animal feed.

### Example 2

For the production of 1 kg of feed additive the following materials are mixed in the dry state:

| | |
|---|---|
| Nor-Spice® AB powder | 25 g |
| Yucca-powder | 30 g |
| Fructo-oligosaccharide* | 100 g |
| Fenugreek powder | 35 g |
| Thyme powder | 20 g |
| Sepiolite 100 | 790 g |

| | |
|---|---|
| *fructo-oligosaccharide (80% by weight), a spray-dried product produced from chicory root. | |

1000 g of feed additive are obtained which can be used for pigs in the same manner as the additive of Example 1.

### Example 3

For the production of 1 kg of feed additive the following materials are mixed in the dry state:

| Flavonoid-containing extract | |
|---|---|
| from green pepper | 25 g |
| Neem powder | 25 g |
| Dried, ground Jerusalem artichokes | 200 g |
| Oregano powder | 20 g |
| Klinoptilolite* | 730 g |

| | |
|---|---|
| *Particle size 50 to 200 µm. | |

1000 g of feed additive are obtained which can be used for pigs in the same manner as the additive of Example 1.

### Example 4

For the production of 1 kg of feed additive the following materials are mixed in the dry state:

| | |
|---|---|
| Flavonoid-containing extract from hips | 25 g |
| Yucca powder | 30 g |
| Fructo-oligosaccharide* | 100 g |
| Oregano powder | 25 g |
| Rosemary powder | 25 g |
| Sepiolite 60/100** | 795 g |

| | |
|---|---|
| *fructo-oligosaccharide (80% by weight), chicory root. a spray-dried product produced from | |
| **Sepiolite 60/100 is a sepiolite product, where at least 57% by weight have a particle size between 100 and 300 µm; available from Nor-Feed ApS, Hvidovre, Denmark. | |

### Example 5

For the production of 1 kg of feed additive the following materials are mixed in the dry state:

| | |
|---|---|
| Flavonoid-containing extract from grapes | 25 g |
| Yucca powder | 30 g |
| Fructo-oligosaccharide* | 100 g |
| Savory powder | 25 g |
| Sepiolite 60/100 | 820 g |

| | |
|---|---|
| * fructo-oligosaccharide (80% by weight), a spray-dried product produced from chicory root. | |

### Feeding experiments

Feeding experiments were caried out with the feed additive according to Example 1 by addition of 5 to 7 kg of feed additive per 1000 kg of animal feed to piglets during the period from the weaning, i.e. at an age of 3 to 4 weeks, and until an age of 75 to 80 days. The experiments were carried out in stocks where all stocks suffered from problems of Lawsonia and E. coli. Within 3 to 7 days after the start of the feeding, the problems of diarrhoea ceased and the piglets revealed more solid faeces.

The results of the feeding experiments appear from the following Table in comparison with the results of the use of conventional growth-promoters based on a total Danish average (source: Landsudvalget for svin (= "The Danish National Committee for Pigs"), Rapport over E-kontrollens resultater (= "Report on the results of the efficiency control"), October 1999, dated 12 January 2000, showing the observed actual Danish data for the period October 1998 to October 1999.

**Table**

| | **Number of pigs** | **Weight start (kg)** | **Weight termi- nated (kg)** | **Growth g/day** | **FEs/kg Growth** | **Mortality %** |
|---|---|---|---|---|---|---|
| Group 1 | 977 | 6.99 | 30.80 | 475 | 1.78 | 1.00 |
| Group 2 | 1191 | 6.65 | 29.00 | 445 | 1.69 | 2.00 |
| Group 3 | 1202 | 6.90 | 26.20 | 446 | 1.96 | 1.50 |
| Group 4 | 1271 | 6.90 | 27.50 | 410 | 1.89 | 1.30 |
| Group 5 | 2053 | 6.70 | 31.20 | 432 | 1.85 | 2.80 |
| Group 6 | 5169 | 5.70 | 30.50 | 447 | 1.81 | 1.50 |
| Group 7 | 2204 | 6.80 | 32.30 | 451 | 1.84 | 1.20 |
| Group 8 | 1372 | 5.82 | 28.00 | 406 | 1.74 | 2.30 |
| Average per pig | 15439 | 6.35 | 29.95 | 440 | 1.82 | 1.69 |
| Conventional growth-promoters* | | 7.20 | 29.80 | 422 | 2.00 | 3.20 |
| FEs/kg growth: Consumption of food units from animal feed for pigs per kg and growth. | | | | | | |
| Mortality: The mortality in % of the piglets during the experimental period. | | | | | | |

| | | | | | | |
|---|---|---|---|---|---|---|
| *Total Danish average | | | | | | |

Based on the present prices of feed mixtures, the feed additive according to the invention and the pig prices, the financial index for the use of the animal feed for pigs according to the invention can be calculated to be 103, where the index for the use of conventional growth-promoters is 100. The calculation of the financial index does not even take into account that the pigs subjected to the experiments weighed on average 0.85 kg less than the pigs of the control groups at the beginning of the experiment. Nor is the saving taken into account which is obtained by the fact that the use of the feed additive according to the invention ensures the same results with respect to weight while being stabled 3 to 4 days less than the control group.

At present no results with respect to the consumption of animal feed, the growth and the mortality of the pigs are available for illustrating the effect of the use of the additive in animal feed compared to the ordinary animal feed not admixed growth-promoters. However, at the time of the introduction of the conventional growth-promoters they turned out to be able to reduce the consumption of animal feed by 10%.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. Natural feed additive with natural, active substances and/or substances identical to natural substances, said feed additive comprising
a) an oligosaccharide-containing component,
b) a first active component comprising saponin and being obtained from a plant material originating from one or more plants selected among the genera Yucca, Quillaja, Azadirachta and/or Trigonella, or the first component is a synthetic material comprising saponin-substances identical to natural substances, and
c) a second active component comprising an antibacterially active substance obtained from a plant material originating from one or more plants selected among citrus fruits, hips, grapes, green pepper and plants of the labiatae family (Lamiaceae), or the second component is a synthetic material comprising antibacterial substances identical to natural substances,
as well as optionally conventional adjuvants or additives.

2. A feed additive as claimed in claim 1, **characterised in that** the plant material originates from lemon, grapefruit and/or a plant selected among the genera Satureia, Origanum, Thymus, Rosmarinus or Mentha.

3. A feed additive as claimed in any of the preceding claims, **characterised in that** the plant materials form part of the feed additive in form of dried plant extracts, pressed plant extracts and/or dried, ground parts of a plant.

4. A feed additive as claimed in any of the preceding claims, **characterised in that** in an amount of feed additive calculated for 1000 kg of animal feed it comprises
100 to 3000 g of oligosaccharide-containing component,
50 to 2000 g of the first active component,
50 to 4000 g of the second active component.

5. A feed additive as claimed in claim 4, **characterised in that** in an amount of feed additive calculated per 1000 kg of animal feed it comprises
200 to 1500 g of oligosaccharide-containing component,
100 to 1000 g of the first active component,
100 to 2000 g of the second active component.

6. A feed additive as claimed in claim 5, **characterised in that** in an amount of feed additive calculated per 1000 kg of animal feed it comprises
300 to 1000 g of oligosaccharide-containing component,
200 to 500 g of the first active component,
200 to 1000 g of the second active component.

7. A feed additive as claimed in any of the preceding claims, **characterised in that** the oligosaccharide-containing component comprises fructo-oligosaccharides.

8. A feed additive as claimed in claim 7, **characterised in that** the oligosaccharides on average comprise 3 to 9 saccharide units.

9. A feed additive as claimed in any of the preceding claims, **characterised in that** it comprises a carrier material acceptable for animal feed.

10. A feed additive as claimed in claim 9, **characterised in that** the carrier material is a clay mineral.

11. A feed additive as claimed in claim 10, **characterised in that** the clay mineral is of the type zeolite, such as klinoptilolite, or sepiolite.

12. A feed additive as claimed in any of the claims 9 to 11, **characterised in that** the carrier material has a particle size, where 50% by weight of the particles are smaller than 350 µm.

13. A feed additive as claimed in claim 12, **characterised in that** the carrier material has a particle size, where 90% by weight of the particles are smaller than 250 µm.

14. A method of producing a feed additive as claimed in any of the preceding claims, **characterised by** mixing in the dry state
a) an oligosaccharide-containing component,
b) a first active component comprising saponin and being obtained from a plant material originating from one or more plants selected among the genera Yucca, Quillaja, Azadirachta and/or Trigonella, or the first component is a synthetic material comprising saponin-substances identical to natural substances, and
c) a second active component comprising an antibacterially active substance obtained from a plant material originating from one or more plants selected among citrus fruits, hips, grapes, green pepper and plants of the labiatae family (Lamiaceae), or the second component is a synthetic material comprising antibacterial substances identical to natural substances, and optionally adding conventional adjuvants or additives at a suitable time.

15. A method as claimed in claim 14, **characterised by** mixing in the dry state
a) an oligosaccharide-containing component,
b) a first active component comprising saponin and being obtained from a plant material originating from one or more plants selected among the genera Yucca, Quillaja, Azadirachta and/or Trigonella, or the first component, is a synthetic material comprising saponin-substances identical to natural substances, and
c) a second active component comprising an antibacterially active substance obtained from a plant material originating from one or more plants selected among citrus fruits, hips, grapes, green pepper and plants of the labiatae family (Lamiaceae), or the second substance is a synthetic material comprising antibacterial substances identical to natural substances, and
d) a carrier material acceptable in the animal feed,
and optionally adding conventional adjuvants or additives at a suitable time.

16. A feed mixture for farm animals comprising the ingredients of the feed additive as claimed in any of the claims 1 to 13 togeether with a conventional animal feed.

17. A feed mixture as claimed in claim 16 comprising 2 to 12 kg of a feed additive per 1000 kg of feed mixture.

18. A method of breeding farm animals, **characterised in that** the animals are fed with a feed mixture as claimed in claim 16 or 17.

## Patentansprüche

1. Natürlicher Futterzusatz mit natürlichen, wirksamen Substanzen oder/und naturidentischen Substanzen, wobei der Futterzusatz umfasst
a) einen Oligosaccharid-enthaltenden Bestandteil,
b) einen ersten Wirkstoff, der Saponin umfasst und der aus einem Pflanzenmaterial erhalten wird, das von einer oder mehreren Pflanzen, ausgewählt aus den Gattungen Yucca, Quillaja, Azadirachta oder/und Trigonella stammt, oder einen ersten Bestandteil, der ein synthetisches Material ist, das naturidentische Saponinsubstanzen umfasst, und
c) einen zweiten Wirkstoff, der eine antibakteriell wirksame Substanz umfasst, die aus einem Pflanzenmaterial erhalten wird, das von einer oder mehreren Pflanzen, ausgewählt aus Citrusfrüchten, Hagebutten, Weintrauben, grünem Pfeffer und Pflanzen der Lippenblütler-Familie (Lamiaceae) stammt, oder einen zweiten Bestandteil, der ein synthetisches Material ist, das naturidentische antibakterielle Substanzen umfasst,
ebenso wie gegebenenfalls konventionelle Adjuvantien oder Zusätze.

2. Futterzusatz nach Anspruch 1, **dadurch gekennzeichnet, dass** das Pflanzenmaterial von Zitrone, Grapefruit oder/und einer Pflanze stammt, ausgewählt unter den Gattungen Satureia, Origanum, Thymus, Rosmarinus oder Mentha.

3. Futterzusatz nach einem der vorhergehenden Ansprüche, **dadurch gekennzeichnet, dass** die Pflanzenmaterialien in Form von getrockneten Pflanzenextrakten, gepressten Pflanzenextrakten oder/und getrockneten, gemahlenen Bestandteilen einer Pflanze einen Teil des Futterzusatzes bilden.

4. Futterzusatz nach einem der vorhergehenden Ansprüche, **dadurch gekennzeichnet, dass** er in einer Menge an Futterzusatz, der für 1000 kg eines Tierfutters berechnet ist,
100 bis 3000 g eines Oligosaccharid-enthaltenden Bestandteils,
50 bis 2000 g des ersten Wirkstoffs,
50 bis 4000 g des zweiten Wirkstoffs umfasst.

5. Futterzusatz nach Anspruch 4, **dadurch gekennzeichnet, dass** er in einer Menge an Futterzusatz, der für 1000 kg eines Tierfutters berechnet ist,
200 bis 1500 g eines Oligosaccharid-enthaltenden Bestandteils,
100 bis 1000 g des ersten Wirkstoffs,
100 bis 2000 g des zweiten Wirkstoffs umfasst.

6. Futterzusatz nach Anspruch 5, **dadurch gekennzeichnet, dass** er in einer Menge an Futterzusatz, der für 1000 kg eines Tierfutters berechnet ist,
300 bis 1000 g eines Oligosaccharid-enthaltenden Bestandteils,
200 bis 500 g des ersten Wirkstoffs,
200 bis 1000 g des zweiten Wirkstoffs umfasst.

7. Futterzusatz nach einem der vorhergehenden Ansprüche, **dadurch gekennzeichnet, dass** der Oligosaccharid-enthaltende Bestandteil Fructo-Oligosaccaride umfasst.

8. Futterzusatz nach Anspruch 7, **dadurch gekennzeichnet, dass** die Oligosaccharide durchschnittlich 3 bis 9 Kohlehydrateinheiten umfassen.

9. Futterzusatz nach einem der vorhergehenden Ansprüche, **dadurch gekennzeichnet, dass** er ein für Tierfutter akzeptables Trägermaterial umfasst.

10. Futterzusatz nach Anspruch 9, **dadurch gekennzeichnet**, das Trägermaterial ein Tonmineral ist.

11. Futterzusatz nach Anspruch 10, **dadurch gekennzeichnet, dass** das Tonmineral ein Tonmineral des Zeolith-Typs ist, wie Klinoptilolith oder Sepiolith.

12. Futterzusatz nach einem der Ansprüche 9 bis 11, **dadurch gekennzeichnet, dass** das Trägermaterial eine Partikelgröße besitzt, wobei 50 Gewichts.-% der Partikel kleiner als 350 µm sind.

13. Futterzusatz nach Anspruch 12, **dadurch gekennzeichnet, dass** das Trägermaterial eine Partikelgröße besitzt, wobei 90 Gewichts.-% der Partikel kleiner als 250 µm sind.

14. Verfahren zur Herstellung eines Futterzusatzes nach einem der vorigen Ansprüche, **dadurch gekennzeichnet, dass** im trockenen Zustand
a) ein Oligosaccharid-enthaltender Bestandteil,
b) ein erster Wirkstoff, der Saponin umfasst und der aus einem Pflanzenmaterial erhalten wird, das von einer oder mehreren Pflanzen, ausgewählt aus den Gattungen Yucca, Quillaja, Azadirachta oder/und Trigonella stammt, oder ein erster Bestandteil, der ein synthetisches Material ist, das naturidentische Saponinsubstanzen umfasst, und
c) ein zweiter Wirkstoff, der eine antibakteriell wirksame Substanz umfasst, die aus einem Pflanzenmaterial erhalten wird, das von einer oder mehreren Pflanzen, ausgewählt aus Citrusfrüchten, Hagebutten, Weintrauben, grünem Pfeffer und Pflanzen der Lippenblütler-Familie (Lamiaceae) stammt, oder ein zweiter Bestandteil, der ein synthetisches Material ist, das naturidentische antibakterielle Substanzen umfasst
gemischt werden und gegebenenfalls konventionelle Adjuvantien oder Zusätze zu einem geeigneten Zeitpunkt zugegeben werden.

15. Verfahren nach Anspruch 14, **dadurch gekennzeichnet, dass** im trockenen Zustand
a) ein Oligosaccharid-enthaltender Bestandteil,
b) ein erster Wirkstoff, der Saponin umfasst und der aus einem Pflanzenmaterial erhalten wird, das von einer oder mehreren Pflanzen, ausgewählt aus den Gattungen Yucca, Quillaja, Azadirachta oder/und Trigonella stammt, oder ein erster Bestandteil, der ein synthetisches Material ist, das naturidentische Saponinsubstanzen umfasst, und
c) ein zweiter Wirkstoff, der eine antibakteriell wirksame Substanz umfasst, die aus einem Pflanzenmaterial erhalten wird, das von einer oder mehreren Pflanzen, ausgewählt aus Citrusfrüchten, Hagebutten, Weintrauben, grünem Pfeffer und Pflanzen der Lippenblütler-Familie (Lamiaceae) stammt, oder ein zweiter Bestandteil, der ein synthetisches Material ist, das naturidentische antibakterielle Substanzen umfasst und
d) ein für Tierfutter akzeptables Trägermaterial
gemischt werden und gegebenenfalls konventionelle Adjuvantien oder Zusätze zu einem geeigneten Zeitpunkt zugegeben werden.

16. Futtergemisch für Nutztiere umfassend die Bestandteile des Futterzusatzes nach einem der Ansprüche 1 bis 13 zusammen mit einem konventionellen Tierfutter.

17. Futtergemisch nach Anspruch 16, umfassend 2 bis 12 kg eines Futterzusatzes pro 1000 kg Futtergemisch.

18. Verfahren zum Züchten von Nutztieren, **dadurch gekennzeichnet, dass** die Tiere mit einem Futtergemisch nach Anspruch 16 oder 17 gefüttert werden.

## Revendications

1. Additif alimentaire naturel avec substances actives naturelles et/ou substances identiques aux substances naturelles, ledit additif alimentaire comprenant :
a) un composant contenant des oligosaccharides,
b) un premier composant actif comprenant de la saponine et étant obtenu à partir d'une substance végétale provenant d'une ou de plusieurs plantes sélectionnées parmi les genres *Yucca, Quillaja, Azadirachta* et/ou *Trigonella*, ou le premier composant est un matériau synthétique comprenant des substances de saponine identiques aux substances naturelles, et
c) un second composant actif comprenant une substance active d'un point de vue antibactérien obtenue à partir d'une substance végétale provenant d'une ou de plusieurs plantes sélectionnées parmi les agrumes, les cynorhodons, le raisin, le poivron vert et des plantes de la famille des *labiatae* (*Lamiaceae*), ou le second composant est un matériau synthétique comprenant des substances antibactériennes identiques aux substances naturelles,
et, facultativement, des adjuvants ou additifs classiques.

2. Additif alimentaire selon la revendication 1, **caractérisé en ce que** la substance végétale provient du citron, du pamplemousse et/ou d'une plante sélectionnée parmi les genres *Satureia, Origanum, Thymus, Rosmarinus ou Mentha*.

3. Additif alimentaire selon l'une quelconque des revendications précédentes, **caractérisé en ce que** les substances végétales font partie de l'additif alimentaire sous forme d'extraits de plantes séchées, d'extraits de plantes pressées et/ou de parties moulues séchées d'une plante.

4. Additif alimentaire selon l'une quelconque des revendications précédentes, **caractérisé en ce que**, dans une quantité d'additif alimentaire calculée pour 1000 kg d'aliments pour animaux, il y a :
de 100 à 3000 g d'un composant contenant des oligosaccharides,
de 50 à 2000 g du premier composant actif,
de 50 à 4000 g du second composant actif.

5. Additif alimentaire selon la revendication 4, **caractérisé en ce que**, dans une quantité d'additif alimentaire calculée pour 1000 kg d'aliments pour animaux, il y a :
de 200 à 1500 g d'un composant contenant des oligosaccharides,
de 100 à 1000 g du premier composant actif,
de 100 à 2000 g du second composant actif.

6. Additif alimentaire selon la revendication 5, **caractérisé en ce que**, dans une quantité d'additif alimentaire calculée pour 1000 kg d'aliments pour animaux, il y a
de 300 à 1000 g d'un composant contenant des oligosaccharides,
de 200 à 500 g du premier composant actif,
de 200 à 1000 g du second composant actif.

7. Additif alimentaire selon l'une quelconque des revendications précédentes, **caractérisé en ce que** le composant contenant des oligosaccharides comprend des fructo-oligosaccharides.

8. Additif alimentaire selon la revendication 7, **caractérisé en ce que** les oligosaccharides comprennent en moyenne de 3 à 9 unités de saccharides.

9. Additif alimentaire selon l'une quelconque des revendications précédentes, **caractérisé en ce qu'**il comprend une substance véhicule acceptable pour un aliment pour animaux.

10. Additif alimentaire selon la revendication 9, **caractérisé en ce que** la substance véhicule est un minéral argileux.

11. Additif alimentaire selon la revendication 10, **caractérisé en ce que** le minéral argileux est du type zéolite, tel que la klinoptilolite ou la sépiolite.

12. Additif alimentaire selon l'une quelconque des revendications 9 à 11, **caractérisé en ce que** la substance véhicule possède une taille particulaire dans laquelle 50 % en poids des particules sont inférieures à 350 µm.

13. Additif alimentaire selon la revendication 12, **caractérisé en ce que** la substance véhicule possède une taille particulaire dans laquelle 90 % en poids des particules sont inférieures à 250 µm.

14. Procédé de fabrication d'un additif alimentaire selon l'une quelconque des revendications précédentes, **caractérisé par** le fait de mélanger, à l'état sec :
a) un composant contenant des oligosaccharides,
b) un premier composant actif comprenant de la saponine et étant obtenu à partir d'une substance végétale provenant d'une ou de plusieurs plantes sélectionnées parmi les genres *Yucca, Quillaja, Azadirachta* et/ou *Trigonella*, ou le premier composant est un matériau synthétique comprenant des substances de saponine identiques aux substances naturelles, et
c) un second composant actif comprenant une substance active d'un point de vue antibactérien obtenue à partir d'une substance végétale provenant d'une ou de plusieurs plantes sélectionnées parmi les agrumes, les cynorhodons, le raisin, le poivron vert et des plantes de la famille des *labiatae* (*Lamiaceae*), ou le second composant est un matériau synthétique comprenant des substances antibactériennes identiques aux substances naturelles,
et par le fait de mélanger, facultativement, des adjuvants ou additifs classiques à un moment approprié.

15. Procédé selon la revendication 14, **caractérisé par** le fait de mélanger, à l'état sec :
a) un composant contenant des oligosaccharides,
b) un premier composant actif comprenant de la saponine et étant obtenu à partir d'une substance végétale provenant d'une ou de plusieurs plantes sélectionnées parmi les genres *Yucca, Quillaja, Azadirachta* et/ou *Trigonella*, ou le premier composant est un matériau synthétique comprenant des substances de saponine identiques aux substances naturelles, et
c) un second composant actif comprenant une substance active d'un point de vue antibactérien obtenue à partir d'une substance végétale provenant d'une ou de plusieurs plantes sélectionnées parmi les agrumes, les cynorhodons, le raisin, le poivron vert et des plantes de la famille des *labiatae* (*Lamiaceae*), ou le second composant est un matériau synthétique comprenant des substances antibactériennes identiques aux substances naturelles, et
d) une substance véhicule acceptable pour un aliment pour animaux,
et par le fait de mélanger, facultativement, des adjuvants ou additifs classiques à un moment approprié.

16. Mélange alimentaire pour animaux fermiers comprenant les ingrédients de l'additif alimentaire selon l'une quelconque des revendications 1 à 13, conjointement avec un aliment pour animaux classique.

17. Mélange alimentaire selon la revendication 16, comprenant de 2 à 12 kg d'un additif alimentaire pour 1000 kg de mélange alimentaire.

18. Méthode d'élevage d'animaux fermiers, **caractérisé en ce que** les animaux sont alimentés avec un mélange alimentaire selon la revendication 16 ou la revendication 17.
